# EUROPÄISCHE PATENTANMELDUNG

(11) **EP 2 557 392 A1**
(43) Veröffentlichungstag der Anmeldung: **13.02.2013**
(21) Anmeldenummer: 11177306.5
(22) Anmeldetag: 11.08.2011
(51) Int. Cl.: G01C 15/00, G08C 17/02

(54) **Vermessungsgerät und Verfahren mit einer auf der Ausrichtung einer Fernbedieneinheit basierenden und skalierbaren Anzielfunktionalität**

(71) Anmelder: Leica Geosystems AG, 9435 Heerbrugg (CH)
(72) Erfinder: Giger, Kurt, CH-9464 Rüthi (CH); Schorr, Christian, CH-9000 St. Gallen (CH); Iqbal, Asif, CH-9443 Widnau (CH)
(74) Vertreter: Kaminski Harmann

(57) **Zusammenfassung**

Die Erfindung betrifft ein Vermessungsgerät (10) zum Vermessen von Zielpunkten, mit einer Anzieleinheit (13), einer Fernbedieneinheit (1) zur Veranlassung von Änderungen der Ausrichtung der Anzieleinheit (13), ausgestattet mit Messfunktionalität zur Bestimmung einer räumlichen Ausrichtung der Fernbedieneinheit (1) und/oder zur Bestimmung von Bewegungen der Fernbedieneinheit (1), und einer Auswerte- und Steuereinheit (4), dadurch gekennzeichnet, dass die Änderungen der Ausrichtung der Anzieleinheit (13) in ihrem Ausmass und/oder ihrer Geschwindigkeit an entsprechende Änderungen einer Ausrichtung bzw. Ausrichtungsänderungsgeschwindigkeit der Fernbedieneinheit (1) derart skalierbar sind, dass mindestens zwei sich mindestens hinsichtlich eines Übersetzungsverhältnisgrades voneinander unterscheidende Anzielmodi bereitgestellt werden.

Ausserdem eine handhaltbare, bewegliche Fernbedieneinheit (1) für ein erfindungsgemässes Vermessungsgerät (10), ein Computerprogrammprodukt zur Bereitstellung, Steuerung und Durchführung einer Anzielfunktionalität für das erfindungsgemässe Vermessungsgerät (10) und ein Verfahren zum Verfolgen und Vermessen von Zielpunkten mittels des erfindungsgemässen Vermessungsgeräts (10).

## Beschreibung

Die Erfindung betrifft ein Vermessungsgerät zum Verfolgen und Vermessen von Raumpunkten von Oberflächen einer Konstruktion - insbesondere Innenräumen von Gebäuden - nach dem Oberbegriff des Anspruchs 1 sowie eine handhaltbare, bewegliche Fernbedieneinheit nach dem Oberbegriff des Anspruchs 11 für das Vermessungsgerät und ein Computerprogrammprodukt nach dem Oberbegriff des Anspruchs 15 zur Bereitstellung, Steuerung und Durchführung einer skalierbaren Anzielfunktionalität für das Vermessungsgerät. Die Erfindung betrifft ausserdem ein zugehöriges Verfahren nach dem Oberbegriff des Anspruchs 12 zum Verfolgen und Vermessen von Raumpunkten von Oberflächen einer Konstruktion mittels des erfindungsgemässen Vermessungsgeräts.

Aus dem Stand der Technik sind einfache Vermessungsgeräte mit einer Anzieleinrichtung bekannt, mithilfe derer manuell ein Raumpunkt angezielt wird und die Anzielrichtung dann manuell zu einem nächsten zu vermessenden Raumpunkt verändert wird, beispielsweise mittels Einstellschrauben eines Theodolitenantriebs.

Die DE 196 48 626 offenbart ein Verfahren und eine Vorrichtung zur Flächenvermessung mit einem Laserentfernungsmesser mit einem Lasersender und einem Laserempfänger. Der Laserentfernungsmesser ist auf einem Stativ montiert. Die Vorrichtung umfasst des Weiteren eine Kipp- und Dreheinrichtung zur Ausrichtung und Richtungsmessung, ein Zielfernrohr sowie eine elektronische Auswerteeinheit zur Winkeldaten- und Entfernungsdatenerfassung und Datenübergabe an einen Computer. Für die Vermessung eines Raumes wird das Gerät an einer zentralen Stelle des Raumes positioniert, von der aus alle zu erfassenden Raum- und/oder Flächeneckpunkte mit dem Laserstrahl anvisiert und beaufschlagt werden können. Gemäss der Offenbarung der DE 196 48 626 werden die zu vermessenden Raumpunkte dabei jeweils einzeln anvisiert, gegebenenfalls bei grösserer Entfernung mit Unterstützung der Beobachtung durch ein Zielfernrohr.

Eine ähnliche Vorrichtung und zugehörige Vermessungsmethode werden in der DE 44 43 413, der ergänzenden Offenlegungsschrift DE 195 45 589 und der WO 96/18083, welche die Priorität der DE 44 43 413 beansprucht, offenbart. Darin werden ein Verfahren und eine Vorrichtung zum Vermessen und Markieren an distanzierten Linien, Flächen oder in zumindest teilweise geschlossenen Räumen beschrieben. Einer oder mehrere relevante Raumpunkte werden nach jeweils zwei Raumwinkeln und der Entfernung gegenüber einem Bezugsort mittels eines kardanisch gelagerten Laserdistanzmessgeräts vermessen. Das Laserdistanzmessgerät ist um zwei zueinander senkrechte Achsen, welche mit Winkelmessern ausgestattet sind, schwenkbar. Gemäss einer in diesen Schriften beschriebenen Ausführungsform werden zu vermessende Raumpunkte von Hand angesteuert, aus den Vermessungsdaten, basierend auf einem vorgegebenen Relativbezug zwischen Vermessung und Markierung, Markierungspunkte berechnet, die dann von der Mess- und Markierungsvorrichtung selbständig angefahren werden.

Bekannte Konstruktionsvermessungsgeräte umfassen typischerweise eine Basis, ein an der Basis um eine Drehachse drehbar gelagertes Oberteil und eine um eine Schwenkachse schwenkbar gelagerte Anzieleinheit mit einer zur Emission eines Laserstrahls ausgebildeten Laserquelle und einem bildgebenden Detektor, beispielsweise ausgestattet mit einer Ausrichtungsanzeigefunktionalität zur Angabe einer Ausrichtung der Anzieleinheit auf einen Raumpunkt als Anzielpunkt, sowie einem Entfernungsbestimmungsdetektor zur Bereitstellung einer Distanzmessfunktionalität. Bei der Ausrichtungsanzeigefunktionalität kann es sich beispielsweise um ein Fadenkreuz im Sucher einer Kamera als bildgebendem Detektor handeln.

Moderne, automatisierte Konstruktionsvermessungsgeräte umfassen des Weiteren Drehantriebe, welche das Oberteil bzw. die Anzieleinheit motorisiert antreibbar machen, Winkelmesser und gegebenenfalls Neigungssensoren zur Bestimmung der räumlichen Ausrichtung der Anzieleinheit, sowie eine Auswerte- und Steuereinheit, welche mit der Laserquelle, dem Entfernungsbestimmungsdetektor sowie den Winkelmessern und gegebenenfalls Neigungssensoren verbunden ist.

Dabei ist die Auswerte- und Steuereinheit beispielsweise mit einem Display mit Eingabemitteln zur Eingabe von Steuerbefehlen eines Benutzers auf dem Display (z.B. Touchscreen) oder einem zu führenden sogenannten Joystick, zur Veränderung der Ausrichtung der Anzieleinheit durch Führung des Joysticks, und zur Darstellung eines Bildes des bildgebenden Detektors bzw. der Kamera auf dem Display ausgestattet, wobei die Ausrichtung der Anzieleinheit mittels der Ausrichtungsanzeigefunktionalität auf dem Display z.B. mittels Überblendung anzeigbar ist. Es sind Funktionalitäten bekannt, bei denen die Eingabemittel auf dem Display als Pfeile ausgebildet sind, deren Markierung bzw. Berührung es einem Benutzer ermöglichen, die Ausrichtung der Anzieleinheit in horizontaler oder vertikaler Richtung zu verändern.

Aus der Computertechnologie sind Fernbedieneinheiten, die mit Bewegungssensoren ausgestattet sind und deren Bewegung in eine Veränderung der Position eines sogenannten Cursors bzw. Anzeigepfeils auf einem Computerbildschirm umgesetzt wird, als sogenannte "Computermäuse" oder als Steuerungen von Computerspielen bekannt.

Das Dokument JP 2004 108 939 A beschreibt ein System zur Steuerung einer Totalstation mittels Bewegen einer Fernbedienung. Die Fernbedieneinheit enthält Beschleunigungs- und Schwerkraftsensoren, die Bewegungen der Fernbedienung erfassen. Die erfassten Bewegungen werden in Steuerungsbefehle umgewandelt und an die Totalstation gesendet. Nicht beschrieben wird hierbei eine Skalierbarkeit des Sensitivitätsgrades, d.h. des Übersetzungsverhältnisses zwischen einer Bewegung der Fernbedieneinheit und resultierender Geschwindigkeit und/oder Ausmass der Änderung der Ausrichtung der Totalstation. Die fehlende Skalierbarkeit ist insbesondere nachteilig bei der Feinausrichtung auf ein Ziel.

Aufgabe der Erfindung ist die Bereitstellung eines Vermessungsgeräts und eines zugehörigen Verfahrens zum Verfolgen und Vermessen von Raumpunkten auf Oberflächen einer Konstruktion mit einer verbesserten Funktionalität zur Änderung der Ausrichtung der Anzieleinheit, welche einem Benutzer einen erhöhten Bedienungskomfort sowohl bei der Grobausrichtung auf ein Ziel als auch bei der Feinjustierung bietet.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen.

Gegenstand der Erfindung ist ein Vermessungsgerät zum Verfolgen und Vermessen von Raumpunkten auf Oberflächen einer Konstruktion, insbesondere eines Gebäudes. Das Vermessungsgerät umfasst eine Basis und ein an der Basis um eine Drehachse innerhalb eines Winkelbereichs eines Azimutal- bzw. Horizontalwinkels drehbar gelagertes Oberteil. Am Oberteil ist eine um eine Schwenkachse innerhalb eines Winkelbereichs eines Elevations― bzw. Vertikalwinkels schwenkbar gelagerte, mit einer zur Emission eines Laserstrahls ausgebildeten Laserquelle und einem Entfernungsbestimmungsdetektor zur Bereitstellung einer Distanzmessfunktionalität ausgestattete Anzieleinheit angeordnet. Die Anzieleinheit umfasst ausserdem einen bildgebenden Detektor, insbesondere eine Kamera, und eine Ausrichtungsanzeigefunktionalität zur Angabe einer Ausrichtung der Anzieleinheit auf einen Raumpunkt als Anzielpunkt.

Das erfindungsgemässe Vermessungsgerät umfasst des Weiteren eine handhaltbare, bewegliche bzw. bewegbare Fernbedieneinheit. Die Fernbedieneinheit weist ein Display auf, zur Darstellung der Ausrichtung der Anzieleinheit auf einen angezielten Raumpunkt in einem Bild des bildgebenden Detektors mittels der Ausrichtungsanzeigefunktionalität. Ausserdem ist die Fernbedieneinheit ausgestattet mit einer Funktionalität zur Veranlassung von Änderungen der Ausrichtung der Anzieleinheit.

Das Vermessungsgerät umfasst ausserdem einen ersten und zweiten Drehantrieb, welche das Oberteil bzw. die Anzieleinheit antreibbar bzw. in einem Azimut- und einem Elevationswinkel ausrichtbar machen. Eine räumliche Ausrichtung der Anzieleinheit gegenüber der Basis ist über zwei Winkelmesser zur Bestimmung der horizontalen und vertikalen Ausrichtung, d.h. des Azimut- und des Elevationswinkels, erfassbar.

Das Vermessungsgerät ist ausgestattet mit einer Auswerte- und Steuereinheit zur Auswertung eingehender Befehle und zur Steuerung des Vermessungsgerätes. Die Auswerte- und Steuereinheit ist mit der Laserquelle, dem Entfernungsbestimmungsdetektor sowie den Winkelmessern verbunden, um eine erfasste Distanz einer entsprechenden Ausrichtung (d.h. dabei erfassten Azimut- und Elevationswinkeln) zuzuordnen und somit Koordinaten für Raumpunkte zu bestimmen. Ausserdem ist die Auswerte- und Steuereinheit mit dem bildgebenden Detektor verbunden, und der erste und der zweite Drehantrieb sind direkt oder indirekt mit der Fernbedieneinheit verbunden.

Zusätzlich kann das Vermessungsgerät mit zwei Neigungssensoren, vorzugsweise mit zwei Libellensensoren ("bubble sensors"), deren Messdaten dann ebenfalls an die Auswerte- und Steuereinheit übermittelt werden, ausgestattet sein. Damit kann zusätzlich die Ausrichtung der Anzieleinheit bezüglich des Schwerefeld-Vektors der Erde bestimmt werden.

Erfindungsgemäss ist die Fernbedieneinheit des Vermessungsgeräts mit einer Messfunktionalität zur Bestimmung einer räumlichen Ausrichtung der Fernbedieneinheit und/oder zur Bestimmung von Änderungen der räumlichen Ausrichtung der Fernbedieneinheit ausgestattet. Änderungen der Ausrichtung der Anzieleinheit sind entsprechend der Ausrichtung der Fernbedieneinheit veranlassbar, als eine dynamische Anzielfunktionalität.

In die Fernbedieneinheit sind als erfindungsgemässe Messfunktionalität insbesondere Sensoren zur Bestimmung einer Lage im Raum und/oder einer Lageänderung der Fernbedieneinheit integriert. Als Sensoren zur Bestimmung einer Lage im Raum kommen zum einen insbesondere elektronische Kompasse, die sich am Magnetfeld der Erde orientieren und azimutale Winkel um die Schwenk- oder Hochachse detektieren können, und zum anderen Neigungssensoren, die die Richtung der Schwerkraft erkennen und zur Bestimmung von Winkeln um die Roll- und um die Nickachse eingesetzt werden, in Frage. Änderungen der Lage im Raum sind insbesondere mittels Beschleunigungs-, Drehraten- und anderen Intertialsensoren erfassbar.

Die Gesamtheit von Basis, daran drehbar gelagertem Oberteil und Anzieleinheit, zusammen mit den zugehörigen Drehantrieben und Winkelmessern sowie gegebenenfalls Neigungssensoren, wird nachfolgend auch als Sensoreinheit bezeichnet. Die Auswerte- und Steuereinheit kann in der Sensoreinheit integriert sein. Dann ist die Fernbedieneinheit drahtlos oder per Kabel mit der Auswerte- und Steuereinheit verbunden, wobei die Kommunikation auf einem Austausch von elektronischen und/oder optischen Signalen beruhen kann. Drahtlos kann eine solche Verbindung beispielsweise mit Bluetooth, Infrarot oder WiFi arbeiten. Die Auswerte- und Steuereinheit kann aber auch in die Fernbedieneinheit integriert sein. Dann ist die Fernbedieneinheit drahtlos oder per Kabel mit der Sensoreinheit verbunden.

Die Fernbedieneinheit ist mit Beschleunigungssensoren zur Bestimmung von Änderungen der Ausrichtung der Fernbedieneinheit ausgestattet, wodurch entsprechende Änderungen der Ausrichtung der Anzieleinheit veranlassbar sind. Damit wird eine Relativanpassung der Ausrichtung der Anzieleinheit an die Ausrichtung der Fernbedieneinheit ermöglicht. Die Ausrichtung der Zielachse der Anzieleinheit folgt dann einer Änderung der Orientierung der Fernbedieneinheit bzw. einer Bewegung mit der Fernbedieneinheit. Beispielsweise veranlasst gemäss dieser Ausführungsform der Erfindung eine Armbewegung mit der Fernbedieneinheit von links unten nach rechts oben eine horizontale Drehung der Anzieleinheit nach rechts und eine Erhöhung des Elevationswinkels ihrer Ausrichtung.

Zusätzlich kann die Fernbedieneinheit auch mit weiteren Inertialsensoren, beispielsweise einem Gyroskop, ausgestattet sein. Wie dem Fachmann bekannt, können dabei durch die entsprechende Kombination mehrerer Inertialsensoren in einer inertialen Messeinheiten (engl.: Inertial Measurement Unit (IMU)) die Beschleunigungen der sechs Freiheiten in der Regel anhand der folgenden Sensorarten gemessen werden: Drei orthogonal angeordnete Beschleunigungssensoren (auch als Translationssensoren bezeichnet) detektieren die lineare Beschleunigung in x- bzw. y⁻ bzw. z-Achse. Daraus kann die translatorische Bewegung (sowie die relative Position) berechnet werden. Drei orthogonal angeordnete Drehratensensoren (auch als Gyroskopische Sensoren bezeichnet) messen die Winkelbeschleunigung um die x- bzw. y- bzw. z-Achse. Daraus kann die Rotationsbewegung (sowie die relative Ausrichtung) berechnet werden.

Derartige auf mikro-elektro-mechanischen Systemen (MEMS) basierte Komponenten beruhende inertiale Messeinheiten, die als miniaturisierte Geräte oder Baugruppen ausgebildet sind, sind aus dem Stand der Technik bereits hinlänglich bekannt und werden schon lange in Grossserie gefertigt.

Diese Ausführungsform der Erfindung erleichtert insbesondere eine Veranlassung von Änderungen der Ausrichtung der Anzieleinheit, auch wenn sich der Bediener nicht neben der Sensoreinheit und mit Blickrichtung in deren Anzielrichtung befindet. Der Bediener muss nicht seine Wahrnehmung der Ausrichtung der Fernbedieneinheit in die Anzielrichtung der Sensoreinheit transformieren. Er kann sich mit der Fernbedieneinheit frei im Raum bewegen, wobei die Ausrichtung der Anzieleinheit entsprechend den Bewegungen der Fernbedieneinheit nachvollzogen wird, unabhängig von der absoluten Ausrichtung von Fernbedieneinheit und Sensoreinheit relativ zueinander.

Änderungen der Ausrichtung der Anzieleinheit sind dabei in ihrem Ausmass und/oder ihrer Geschwindigkeit an entsprechende Änderungen einer Ausrichtung bzw. Ausrichtungsänderungsgeschwindigkeit der Fernbedieneinheit, vorzugsweise benutzerdefinierbar, skalierbar. Der dadurch variabel skalierbare Sensitivität- bzw. Übersetzungsverhältnisgrad der Ausrichtung ist insbesondere vorteilhaft, um das Messgerät in einem ersten Anzielmodus zunächst zügig auf ein Ziel grob auszurichten und dann in einem zweiten Anzielmodus mit geringerer Empfindlichkeit die Feinausrichtung vorzunehmen. Der Sensitivitäts- oder Übersetzungsverhältnisgrad kann bevorzugt in zwei oder mehr Stufen oder stufenlos vom Bediener einstellbar sein.

Mittels dieser hinsichtlich des Übersetzungsverhältnisses skalierbaren, und damit variablen, Relativanpassung der Ausrichtung von Anzieleinheit und Fernbedieneinheit werden eine sehr hohe Genauigkeit und zugleich eine hohe Geschwindigkeit für die Einstellung der Ausrichtung der Anzieleinheit mittels Bewegung der Fernbedieneinheit ermöglicht.

In einer bevorzugten Ausführungsform kann der Übersetzungsverhältnisgrad auch von anderen Werten, wie der Entfernung zum gerade angezielten Ziel abhängen, indem beispielsweise ferne Ziele automatisch in einem Anzielmodus mit geringerer Änderungsgeschwindigkeit angesteuert werden als nahe Ziele. Auch diese Funktion ist bevorzugt vom Bediener auswählbar.

Die Fernbedieneinheit kann zusätzlich mit einer Winkelmessfunktionalität, vorzugsweise basierend auf einem Kompass, sowie mit Neigungssensoren ausgestattet sein, wodurch die Ausrichtung der Anzieleinheit an eine aktuelle azimutale Ausrichtung und Neigung der Fernbedieneinheit anpassbar ist. Damit wird eine Absolutanpassung der Ausrichtung der Anzieleinheit an die Ausrichtung der Fernbedieneinheit ermöglicht. Vorteilhaft können gemäss dieser Variante Änderungen der Ausrichtung der Anzieleinheit intuitiv leicht veranlasst werden, insbesondere wenn sich der Bediener der Fernbedieneinheit neben der Sensoreinheit, in einer Blickrichtung gleichgerichtet zur Anzielrichtung der Anzieleinheit, befindet. Allerdings ist die Präzision bzw. Auflösung von Ausrichtungsänderungen der Anzieleinheit durch die Genauigkeit der Einstellbarkeit der Ausrichtung der Fernbedieneinheit begrenzt.

Vorteilhaft kann eine solche Ausführungsform mit einer Absolutanpassung der Ausrichtung von Fernbedieneinheit und Sensoreinheit mit Anzieleinheit aktivierbar oder deaktivierbar sein, beispielsweise durch Nachvollzug der Ausrichtung der Fernbedieneinheit durch entsprechende Änderungen der Ausrichtung der Anzieleinheit, solange ein Eingabemittel der Fernbedieneinheit, wie beispielsweise ein Bedienungsknopf, vom Bediener während der Bewegung der Fernbedieneinheit gedrückt wird.

Generell wird bevorzugt, dass die Fernbedieneinheit ausgestattet ist mit einer Eingabemöglichkeit für einen Bediener, mittels derer Änderungen der Ausrichtung der Anzieleinheit entsprechend der räumlichen Ausrichtung der Fernbedieneinheit aktivierbar oder deaktivierbar sind. Das Display der Fernbedieneinheit kann als ein Touchscreen ausgebildet sein, auf dem Befehle eines Benutzers durch Berührung eingebbar sind.

Vorteilhaft ist des Weiteren, wenn Änderungen der Ausrichtung der Anzieleinheit entsprechend zu Änderungen der Ausrichtung der Fernbedieneinheit dazu gleichgerichtet oder entgegengesetzt gerichtet veranlassbar sind, insbesondere mittels einer durch einen Benutzer aktiverbaren Eingabemöglichkeit an der Fernbedieneinheit.

Ebenfalls möglich ist die Verwendung einer zweiteiligen Fernbedieneinheit, zum Beispiel dergestalt, dass der eine, in der Hand gehaltene, Teil der Fernbedieneinheit Messfunktionalität, insbesondere Sensorkomponenten, beinhaltet, um durch Änderungen der Ausrichtung dieses Teils Änderungen der Ausrichtung der Anzieleinheit zu bewirken, und im anderen Teil der Fernbedieneinheit die Auswerte- und Steuereinheit, ein Display, Eingabemittel sowie Mittel zur Übertragung der Daten an die Sensoreinheit bereitgestellt werden.

Von Vorteil ist ausserdem, wenn die Ausrichtungsanzeigefunktionalität ausgelegt ist zur Erzeugung eines Fadenkreuzes zur Angabe einer Ausrichtung der Anzieleinheit auf einen Raumpunkt als Anzielpunkt.

Vorteilhaft ist des Weiteren, wenn die Fernbedieneinheit und/oder die Sensoreinheit mit einem Ortungssystem, insbesondere einem satellitengestützten Ortungssystem, ausgestattet sind, beispielsweise mit einem GPS-Empfänger.

Ein weiterer Gegenstand der Erfindung ist eine handhaltbare, bewegliche Fernbedieneinheit für ein erfindungsgemässes Vermessungsgerät nach einer der vorgenannten Ausführungsformen. Erfindungsgemäss ist die Fernbedieneinheit des Vermessungsgeräts mit einer Messfunktionalität zur Bestimmung einer räumlichen Ausrichtung der Fernbedieneinheit und/oder zur Bestimmung von Änderungen der räumlichen Ausrichtung der Fernbedieneinheit ausgestattet. Änderungen der Ausrichtung der Anzieleinheit sind entsprechend der Ausrichtung der Fernbedieneinheit veranlassbar, als eine dynamische Anzielfunktionalität.

Gegenstand der Erfindung ist auch ein Computerprogrammprodukt mit Programmcode, der auf einem maschinenlesbaren Träger gespeichert ist, zur Bereitstellung, Steuerung und Durchführung der dynamischen Anzielfunktionalität des erfindungsgemässen Vermessungsgeräts nach einer der vorgenannten Ausführungsformen, insbesondere wenn das Programm auf einer als Auswerte- und Steuereinheit des Vermessungsgeräts ausgebildeten elektronischen Datenverarbeitungseinheit ausgeführt wird.

Ein weiterer Gegenstand der Erfindung ist ein Verfahren mit einem erfindungsgemässen Vermessungsgerät nach einer der vorgenannten Ausführungsformen zum Verfolgen und Vermessen von Raumpunkten von Oberflächen einer Konstruktion, insbesondere Innenräumen von Gebäuden.

Im Rahmen dieses Verfahrens wird die Ausrichtung der Anzieleinheit auf einen angezielten Raumpunkt in einem Bild des bildgebenden Detektors mittels der Ausrichtungsanzeigefunktionalität auf dem Display der Fernbedieneinheit dargestellt. Die räumliche Ausrichtung der Fernbedieneinheit und/oder Änderungen der räumlichen Ausrichtung der Fernbedieneinheit werden mit einer Messfunktionalität der Fernbedieneinheit bestimmt. Änderungen der Ausrichtung der Anzieleinheit werden entsprechend der räumlichen Ausrichtung der Fernbedieneinheit veranlasst.

Die Fernbedieneinheit ist mit Beschleunigungs- und/oder Drehratensensoren zur Bestimmung von Änderungen der Ausrichtung der Fernbedieneinheit ausgestattet, wodurch entsprechende Änderungen der Ausrichtung der Anzieleinheit veranlassbar sind. Damit wird eine Relativanpassung der Ausrichtung der Anzieleinheit an die Ausrichtung der Fernbedieneinheit ermöglicht. Die Ausrichtung der Zielachse der Anzieleinheit folgt dann einer Änderung der Orientierung der Fernbedieneinheit bzw. einer Bewegung mit der Fernbedieneinheit. Beispielsweise veranlasst gemäss dieser Ausführungsform der Erfindung eine Armbewegung mit der Fernbedieneinheit von links unten nach rechts oben eine horizontale Drehung der Anzieleinheit nach rechts und eine Erhöhung des Elevationswinkels ihrer Ausrichtung. Zusätzlich kann die Fernbedieneinheit auch mit weiteren Inertialsensoren, beispielsweise einem Gyroskop, ausgestattet sein.

Die Fernbedieneinheit kann zusätzlich mit einer Winkelmessfunktionalität, vorzugsweise basierend auf einem Kompass, sowie mit Neigungssensoren ausgestattet sein, wodurch die Ausrichtung der Anzieleinheit an eine aktuelle azimutale Ausrichtung und Neigung der Fernbedieneinheit anpassbar ist. Damit wird eine Absolutanpassung der Ausrichtung der Anzieleinheit an die Ausrichtung der Fernbedieneinheit ermöglicht. Vorteilhaft können gemäss dieser Variante Änderungen der Ausrichtung der Anzieleinheit intuitiv leicht veranlasst werden, insbesondere wenn sich der Bediener der Fernbedieneinheit neben der Sensoreinheit, in einer Blickrichtung gleichgerichtet zur Anzielrichtung der Anzieleinheit, befindet. Allerdings ist die Präzision bzw. Auflösung von Ausrichtungsänderungen der Anzieleinheit durch die Genauigkeit der Einstellbarkeit der Ausrichtung der Fernbedieneinheit begrenzt.

Das erfindungsgemässe Vermessungsgerät und das erfindungsgemässe Verfahren zum Verfolgen und Vermessen von Raumpunkten von Oberflächen einer Konstruktion werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen illustrieren
Figur 1 eine erste Ausführungsform eines erfindungsgemässen Vermessungsgeräts zum Verfolgen und Vermessen von Raumpunkten von Oberflächen einer Konstruktion, insbesondere Innenräumen von Gebäuden;
Figur 2 eine zweite Ausführungsform eines erfindungsgemässen Vermessungsgeräts;
Figuren 3a und 3b die Funktionsweise der dynamischen Anzielfunktionalität des erfindungsgemässen Vermessungsgeräts und des zugehörigen erfindungsgemässen Vermessungsverfahrens;
Figuren 4a und 4b die Funktionsweise des skalierbaren Übersetzungsverhältnisgrades des erfindungsgemässen Konstruktionsvermessungsgeräts und des zugehörigen erfindungsgemässen Vermessungsverfahrens; und
Figur 5 eine dritte Ausführungsform eines erfindungsgemässen Vermessungsgeräts mit einer zweiteiligen Fernbedieneinheit.

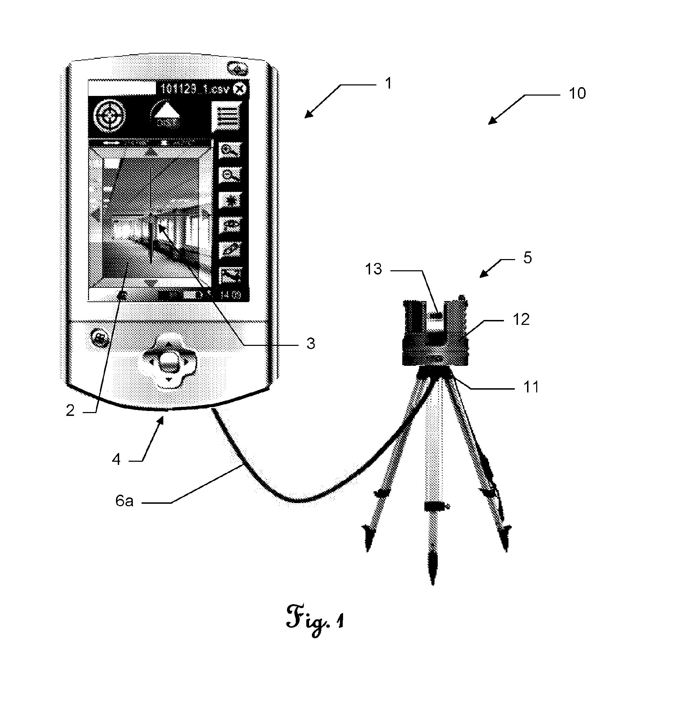

Figur 1 illustriert ein erfindungsgemässes Vermessungsgerät 10 zum Verfolgen und Vermessen von Raumpunkten von Oberflächen einer Konstruktion, insbesondere Innenräumen von Gebäuden.

Das Vermessungsgerät 10 umfasst eine in diesem Beispiel als ein dreibeiniges Stativ ausgebildete Basis 11 mit einem darauf drehbar gelagerten Oberteil 12. Eine am Oberteil 12 schwenkbar gelagerte Anzieleinheit 13 ist mit einer zu einer Emission eines Laserstrahls ausgebildeten Laserquelle und einem Laserlicht-Detektor als Entfernungsbestimmungsdetektor ausgestattet und stellt damit eine Distanzmessfunktionalität bereit. Die Anzieleinheit 13 umfasst des Weiteren einen bildgebenden Detektor, insbesondere eine digitale Kamera, und eine Ausrichtungsanzeigefunktionalität zur Angabe einer Ausrichtung der Anzieleinheit 13 auf einen Raumpunkt als Anzielpunkt.

Das erfindungsgemässe Vermessungsgerät 10 umfasst ausserdem eine handhaltbare, bewegliche Fernbedieneinheit 1. Die Fernbedieneinheit weist ein Display 2 auf, zur Darstellung, beispielsweise mittels eines Fadenkreuzes 3, der Ausrichtung der Anzieleinheit 13 auf einen angezielten Raumpunkt in einem Bild des bildgebenden Detektors mittels der Ausrichtungsanzeigefunktionalität. Ausserdem ist die Fernbedieneinheit 1 ausgestattet mit einer Funktionalität zur Veranlassung von Änderungen der Ausrichtung der Anzieleinheit 13.

Ein erster und ein zweiter Drehantrieb machen das Oberteil 12 bzw. die Anzieleinheit 13 antreibbar bzw. in einem Azimut- und einem Elevationswinkel ausrichtbar. Die räumliche Ausrichtung der Anzieleinheit 13 gegenüber der Basis 11 ist über zwei Winkelmesser erfassbar. Zusätzlich können Neigungssensoren zur Bestimmung der Ausrichtung bezüglich des Schwerefeld-Vektors der Erde vorgesehen sein. Die Gesamtheit von Basis 11, daran drehbar gelagertem Oberteil 12 und Anzieleinheit 13, zusammen mit den zugehörigen Drehantrieben und Winkelmessern sowie gegebenenfalls Neigungssensoren, wird nachfolgend auch als Sensoreinheit 5 bezeichnet.

Das Vermessungsgerät 10 umfasst des Weiteren eine Auswerte- und Steuereinheit 4. Diese ist mit der Laserquelle, dem Laserlicht-Detektor sowie den Winkelmessern und gegebenenfalls mit den Neigungssensoren verbunden, um eine erfasste Distanz und erfasste Azimut- und Elevationswinkel einer entsprechenden Ausrichtung der Anzieleinheit 13 zuzuordnen und somit Koordinaten für Raumpunkte zu bestimmen. Ausserdem ist die Auswerte- und Steuereinheit 4 mit dem bildgebenden Detektor verbunden, und der erste und der zweite Drehantrieb sind direkt oder indirekt mit der Fernbedieneinheit 1 verbunden.

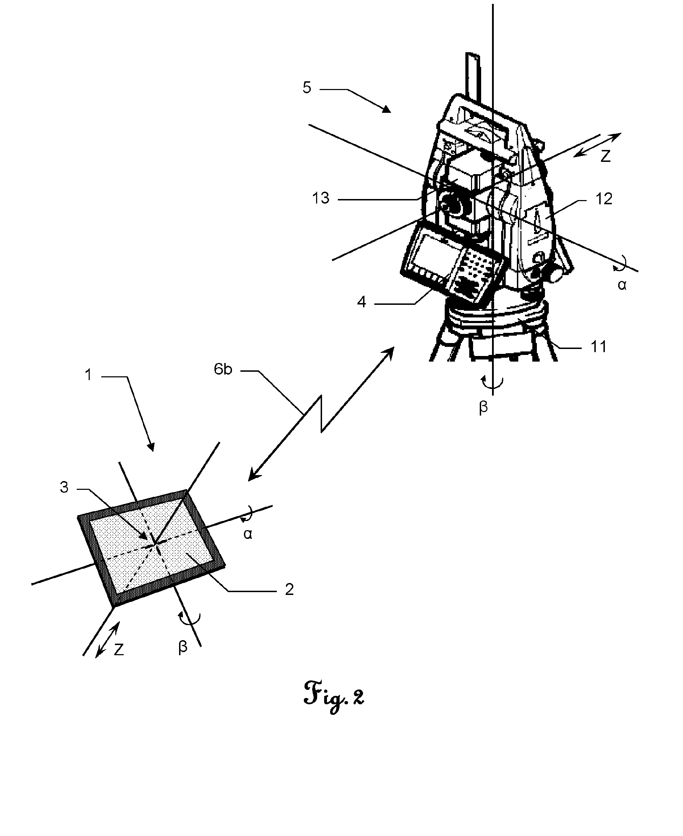

Die Auswerte- und Steuereinheit 4 kann, entsprechend der Darstellung gemäss Figur 1, in die in die Fernbedieneinheit 1 integriert sein. Alternativ kann die Auswerte- und Steuereinheit 4 auch, wie in Figur 2 dargestellt, in die Sensoreinheit 5 integriert sein. Im ersten Fall ist die Fernbedieneinheit 1 mit der Sensoreinheit 5 verbunden, im zweiten Fall mit der Auswerte- und Steuereinheit 4 der Sensoreinheit 5. Die Verbindung kann per Kabel 6a oder über eine drahtlose Verbindung 6b, beispielsweise mittels Bluetooth, erfolgen. Erfindungsgemäss ist die Fernbedieneinheit 1 des Vermessungsgeräts 10 mit einer Messfunktionalität zur Bestimmung von Änderungen der räumlichen Ausrichtung der Fernbedieneinheit 1 und vorzugsweise auch zur Bestimmung einer räumlichen Ausrichtung der Fernbedieneinheit 1 ausgestattet. Als eine dynamische Anzielfunktionalität sind Änderungen der Ausrichtung der Anzieleinheit 13 entsprechend der Ausrichtungsänderung bzw. der Ausrichtung der Fernbedieneinheit 1 veranlassbar.

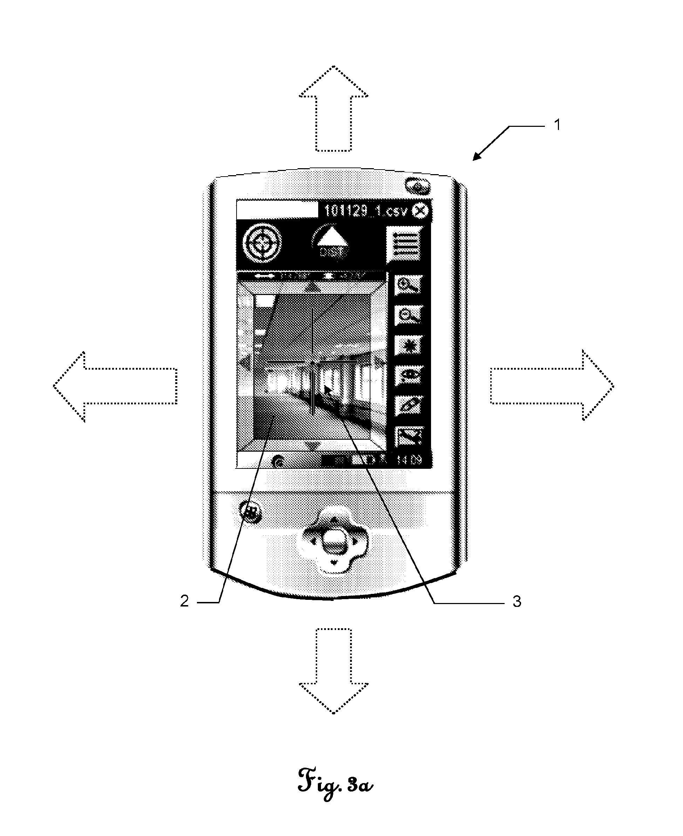

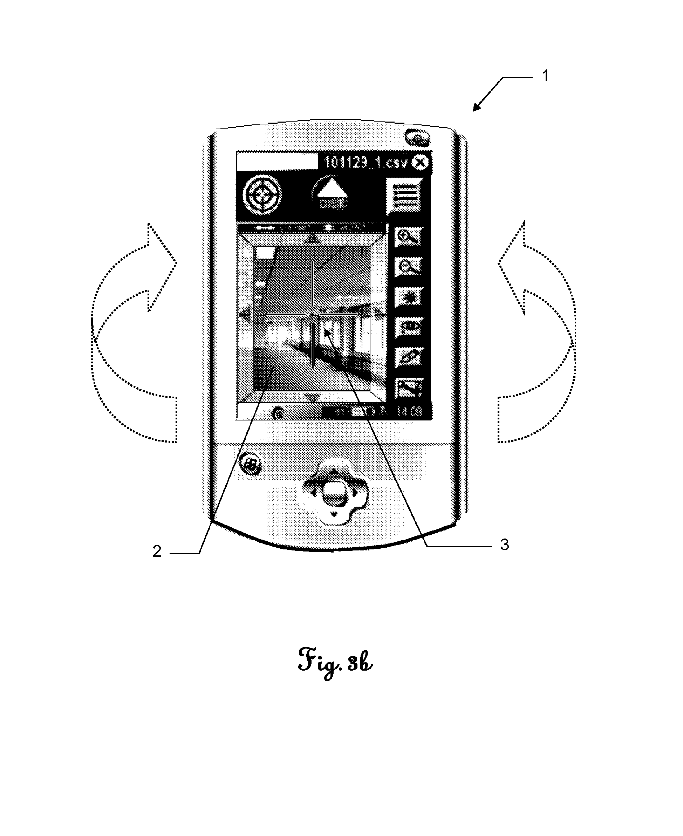

Die Fernbedieneinheit 1 ist mit Beschleunigungssensoren zur Bestimmung von Änderungen der Ausrichtung der Fernbedieneinheit 1 ausgestattet, wodurch entsprechende Änderungen der Ausrichtung der Anzieleinheit 13 veranlassbar sind. Damit wird eine Relativanpassung der Ausrichtung der Anzieleinheit 13 an die Ausrichtung der Fernbedieneinheit 1 ermöglicht. Die Ausrichtung der Zielachse der Anzieleinheit 13 folgt dann einer Änderung der Orientierung der Fernbedieneinheit 1 bzw. einer Bewegung mit der Fernbedieneinheit 1. Dieses ist anhand der Figuren 3a und 3b illustriert. Beispielsweise veranlasst gemäss dieser Ausführungsform der Erfindung eine Armbewegung mit der Fernbedieneinheit 1 von links unten nach rechts oben eine horizontale Drehung der Anzieleinheit 13 nach rechts und eine Erhöhung des Elevationswinkels ihrer Ausrichtung.

Dabei illustriert Figur 3a mittels Pfeilen Bewegungen der Fernbedieneinheit 1 in vertikaler und horizontaler Richtung, womit entsprechende Änderungen der Ausrichtung der Anzieleinheit 13 in vertikaler bzw. horizontaler Richtung veranlassbar sind.

Analog illustriert Figur 3b Drehbewegungen mit der Fernbedieneinheit 1, welche in entsprechende Drehungen der Ausrichtung der Anzieleinheit 13 umsetzbar sind.

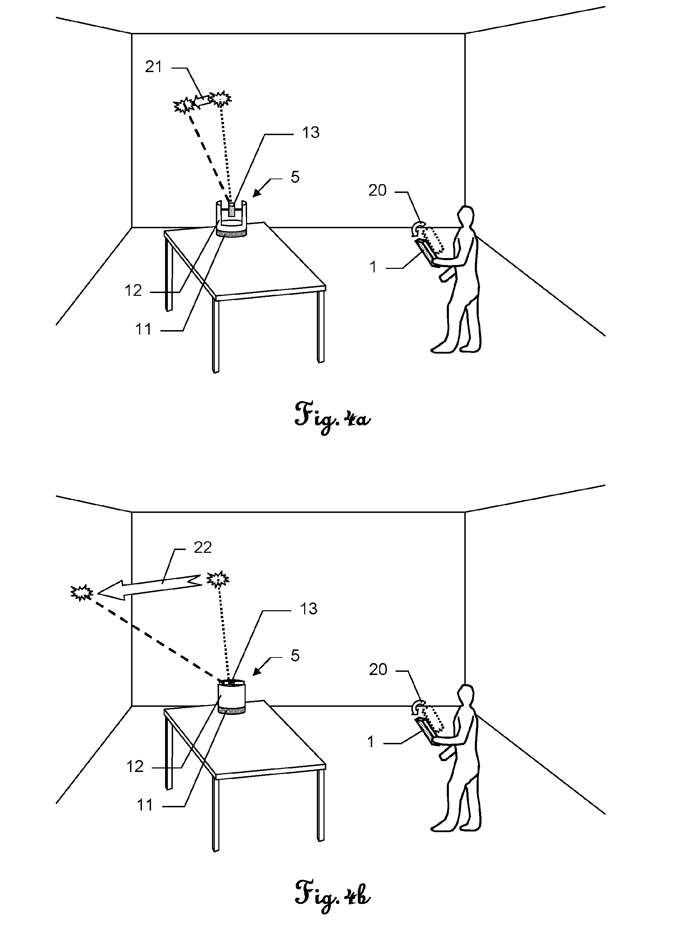

Änderungen der Ausrichtungen der Anzieleinheit 13 sind in ihrem Ausmass und/oder ihrer Geschwindigkeit an entsprechende Änderungen einer Ausrichtung bzw. Ausrichtungsänderungsgeschwindigkeit der Fernbedieneinheit 1 skalierbar, sodass mindestens zwei sich hinsichtlich des Übersetzungsverhältnisgrades voneinander unterscheidende Anzielmodi bereitgestellt werden. Dies wird in den Figuren 4a und 4b dargestellt. Bevorzugt sind diese Änderungen des Übersetzungsverhältnisses sowohl in einer azimutalen als auch einer elevativen Richtung skalierbar, wobei die Skalierbarkeit vorzugsweise benutzerseitig definierbar ist. Durch diese Skalierbarkeit des Übersetzungsverhältnisses mit mehreren Anzielmodi wird eine sehr hohe Genauigkeit für die Einstellung der Ausrichtung der Anzieleinheit 13 mittels Bewegung der Fernbedieneinheit 1 ermöglicht. In Figur 4a ist der Übersetzungsverhältnisgrad so skaliert, dass die durch den Benutzer veranlasste Bewegung 20 der Fernbedieneinheit 1 eine Ausrichtungsänderung der Anzieleinheit 13 bewirkt, aus der eine Bewegung 21 des Anzielpunktes resultiert. In Figur 4b bewirkt dieselbe Bewegung 20 der Fernbedieneinheit 1 eine grössere Ausrichtungsänderung der Anzieleinheit 13, aus der eine Bewegung 22 des Anzielpunktes resultiert.

Vorteilhaft wird zusätzlich oder alternativ eine automatische Skalierfunktion für das Übersetzungsverhältnis bereitgestellt, bei welcher das Ausmass und/oder die Geschwindigkeit einer Ausrichtungsänderung der Anzieleinheit 13 abhängig von der Entfernung zum angezielten Zielpunkt ist. Diese automatische entfernungsabhängige Skalierfunktion ist bevorzugt benutzerseitig zu- und abschaltbar ausgestaltet.

Die Fernbedieneinheit 1 kann mit einer Winkelmessfunktionalität, vorzugsweise basierend auf einem Kompass, sowie mit Neigungssensoren ausgestattet sein, wodurch die Ausrichtung der Anzieleinheit 13 an eine aktuelle azimutale Ausrichtung und Neigung der Fernbedieneinheit 1 anpassbar ist. Damit wird eine Absolutanpassung der Ausrichtung der Anzieleinheit 13 an die Ausrichtung der Fernbedieneinheit 1 ermöglicht. Vorteilhaft können gemäss dieser Variante Änderungen der Ausrichtung der Anzieleinheit 13 intuitiv leicht veranlasst werden, insbesondere wenn sich der Bediener der Fernbedieneinheit 1 neben der Sensoreinheit 5, in einer Blickrichtung gleichgerichtet zur Anzielrichtung der Anzieleinheit 13, befindet. Allerdings ist die Präzision bzw. Auflösung von Ausrichtungsänderungen der Anzieleinheit 13 durch die Genauigkeit der Einstellbarkeit der Ausrichtung der Fernbedieneinheit 1 begrenzt. Diese Funktionalität einer Absolutanpassung der Ausrichtung der Anzieleinheit 13 an die Ausrichtung der Fernbedieneinheit 1 ist in den Figuren nicht illustriert.

Es wird bevorzugt, dass die Fernbedieneinheit 1 mit einer Eingabemöglichkeit für einen Bediener ausgestattet ist, mittels derer Änderungen der Ausrichtung der Anzieleinheit 13 entsprechend der räumlichen Ausrichtung der Fernbedieneinheit 1 aktivierbar oder deaktivierbar sind. Die Eingabemöglichkeit kann bevorzugt über ein als Touchscreen ausgebildetes Display 2 bereitgestellt sein. Beispielsweise könnte durch Betätigung einer Eingabetaste an der Fernbedieneinheit 1 die Sensoreinheit 5 veranlasst werden, die Werte der aktuellen azimutalen Ausrichtung und Neigung der Fernbedieneinheit 1, gemessen mit den in der Fernbedieneinheit 1 integriertem Kompass und Neigungssensoren, zu übernehmen und entsprechend die Ausrichtung der Anzieleinheit 13 anzupassen.

Vorteilhaft verfügt die Fernbedieneinheit 1 bzw. die Auswerte- und Steuereinheit 4 über eine Gestenerkennungsfunktion, die bestimmte, insbesondere Voreingestellte oder benutzerdefinierte, Bewegungen und/oder Bewegungsabläufe der Fernbedieneinheit 1 als Steuerungsbefehl deuten kann.

Vorteilhaft ist die Fernbedieneinheit 1 ausserdem mit einem Feedbackmechanismus, beispielsweise mit einem Vibrationsmechanismus, ausgestattet, mittels dessen Informationen über Zustand der Fernbedieneinheit 1 und/oder der Sensoreinheit 5 oder über den Zustand der Kommunikation zwischen Fernbedieneinheit 1 und Sensoreinheit 5 einem Bediener angebbar sind.

In Kombination mit bekannten Vorkehrungen zur Zielerkennung, wie z.B. der Erkennung eines in Reichweite der Anzieleinheit 13 befindlichen Reflexionsprismas, oder einer Mustererkennung von typischen Merkmalen, wie z.B. Zielmarken, Vermessungspunkten, Raumecken und Kanten, ermöglicht die vorangehend beschriebene dynamische Anzielfunktionalität basierend auf der Ausrichtung der Fernbedieneinheit 1, den Vorgang des Anzielens verschiedener Raumpunkte wesentlich zu vereinfachen, verglichen mit den eingangs beschriebenen Vorrichtungen und Verfahren aus dem bekannten Stand der Technik.

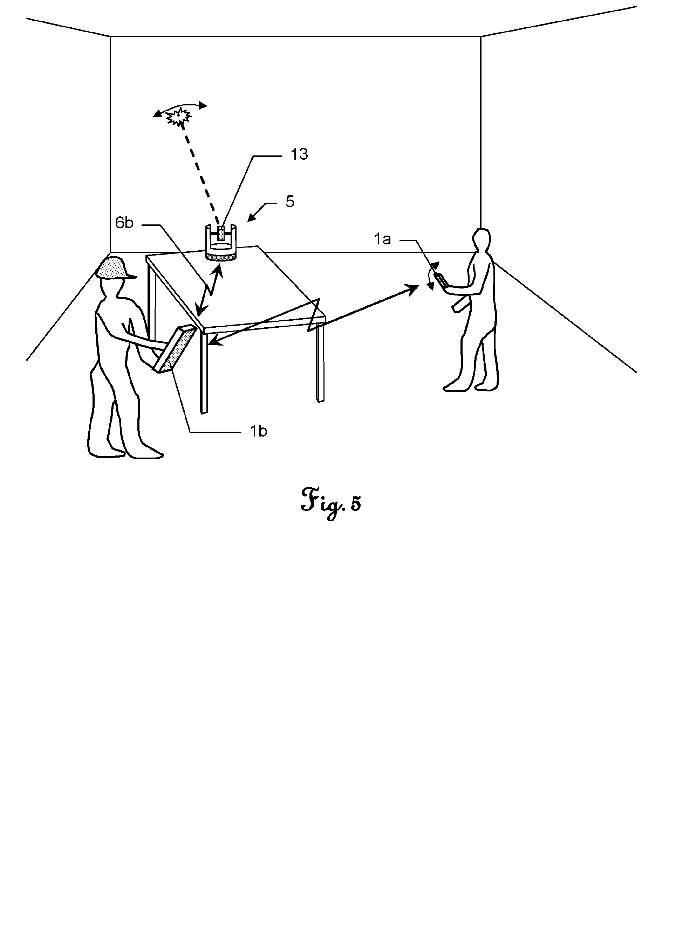

In Figur 5 ist eine weitere Ausführungsform der Erfindung dargestellt. In dieser Ausführungsform besteht die Fernbedieneinheit aus zwei getrennten Teilen 1a und 1b. Der erste Teil 1a der Fernbedieneinheit enthält die Messfunktionalität, insbesondere Sensorkomponenten, um durch Änderungen der Ausrichtung dieses Teils Änderungen der Ausrichtung der Anzieleinheit zu bewirken. Im zweiten Teil 1b der Fernbedieneinheit werden die Auswerte- und Steuereinheit, ein Display, Eingabemittel sowie Mittel zur Übertragung der Daten an die Sensoreinheit bereitgestellt. Die Daten können zwischen den beiden Teilen 1a, 1b der Fernbedieneinheit und der Sensoreinheit 5 sowohl per Kabel als auch, wie in Figur 5 dargestellt, über eine kabellose Verbindung 6b übertragen werden, zum Beispiel mittels Funkwellen.

Es versteht sich, dass die in den Figuren dargestellten Ausführungsformen nur mögliche Beispiele des erfindungsgemässen Vermessungsgeräts zeigen. Der Fachmann weiss, in welcher Weise sich dargestellte Details der Ausführungsbeispiele sinnvoll miteinander kombinieren lassen. Die verschiedenen Ansätze können ebenso miteinander wie auch mit anderen Vermessungsgeräten des Standes der Technik kombiniert werden.

## Patentansprüche

1. Vermessungsgerät (10) zum Vermessen von Zielpunkten, mit
● einer Sensoreinheit (5), die ausgestattet ist mit
● einer Anzieleinheit (13), welche an einem an einer Basis (11) um eine Drehachse drehbar gelagerten Oberteil (12) um eine Schwenkachse schwenkbar gelagert ist, sowie
● einem ersten und einem zweiten Drehantrieb, welche das Oberteil (12) bzw. die Anzieleinheit (13) antreib- und ausrichtbar machen;
● einer Fernbedieneinheit (1) zur Veranlassung von Änderungen der Ausrichtung der Anzieleinheit (13) und ausgestattet mit Messfunktionalität zur Bestimmung einer räumlichen Ausrichtung der Fernbedieneinheit (1) und/oder zur Bestimmung von Bewegungen der Fernbedieneinheit (1); und
● einer Auswerte- und Steuereinheit (4);
wobei
● eine räumliche Ausrichtung der Anzieleinheit (13) gegenüber der Basis (11) über zwei Winkelmesser erfassbar ist; und
● die Auswerte- und Steuereinheit (4) mit der Laserquelle, dem Entfernungsbestimmungsdetektor sowie den Winkelmessern verbunden ist, um eine erfasste Distanz einer entsprechenden Ausrichtung zuzuordnen und somit Koordinaten für Zielpunkte zu bestimmen;
**dadurch gekennzeichnet, dass**
die Änderungen der Ausrichtung der Anzieleinheit (13) in einer azimutalen und/oder elevativen Richtung in ihrem Ausmass und/oder ihrer Geschwindigkeit an entsprechende Änderungen einer azimutalen und/oder elevativen Ausrichtung bzw. Ausrichtungsänderungsgeschwindigkeit der Fernbedieneinheit (1) derart skalierbar sind, dass mindestens zwei sich mindestens hinsichtlich eines Übersetzungsverhältnisgrades voneinander unterscheidende Anzielmodi bereitgestellt werden.

2. Vermessungsgerät (10) nach Anspruch 1,
**dadurch gekennzeichnet, dass**
es zum Vermessen von Raumpunkten im Rahmen von Bau und/oder Ausbau - insbesondere Innenausbau - von Gebäuden geeignet ist.

3. Vermessungsgerät (10) nach Anspruch 1 oder Anspruch 2, **dadurch gekennzeichnet, dass**
eine Skalierung des Übersetzungsverhältnisses und/oder des Ausmasses und/oder der Geschwindigkeit der Ausrichtungsänderung der Anzieleinheit (13)
● benutzerdefinierbar ist, insbesondere an der Fernbedieneinheit (1) einstellbar, und/oder
● abhängig ist von einer Entfernung zwischen der Anzieleinheit (13) und einem Zielpunkt.

4. Vermessungsgerät (10) nach einem der vorangegangenen Ansprüche,
**dadurch gekennzeichnet, dass**
die Fernbedieneinheit (1) ausgestattet ist mit
● einer Winkelmessfunktionalität, vorzugsweise mittels eines Kompasses und Neigungssensoren, wodurch die Ausrichtung der Anzieleinheit (13) an eine aktuelle azimutale Ausrichtung und Neigung der Fernbedieneinheit (1) anpassbar ist, und/oder
● Beschleunigungssensoren und/oder Drehratensensoren, insbesondere in Form einer inertialen Messeinheit, zur Bestimmung von Änderungen der Ausrichtung der Fernbedieneinheit (1), wodurch entsprechende Änderungen der Ausrichtung der Anzieleinheit (13) veranlassbar sind.

5. Vermessungsgerät (10) nach einem der vorangegangenen Ansprüche,
**dadurch gekennzeichnet, dass**
die Fernbedieneinheit (1) mit einer Eingabemöglichkeit für einen Bediener ausgestattet ist, mittels derer Änderungen der Ausrichtung der Anzieleinheit (13) entsprechend der räumlichen Ausrichtung der Fernbedieneinheit (1) aktivierbar oder deaktivierbar sind.

6. Vermessungsgerät (10) nach einem der vorangegangenen Ansprüche,
**dadurch gekennzeichnet, dass**
● die Anzieleinheit (13) mit einem bildgebenden Detektor ausgestattet ist, und
● die Fernbedieneinheit (1) mit einem Display (2) ausgestattet ist zur Darstellung der Ausrichtung der Anzieleinheit (13) auf einen Zielpunkt in einem Bild des bildgebenden Detektors.

7. Vermessungsgerät (10) nach Anspruch 6,
**dadurch gekennzeichnet, dass**
das Display (2) als ein Touchscreen ausgebildet ist, auf dem Befehle eines Benutzers durch Berührung eingebbar sind.

8. Vermessungsgerät (10) nach einem der vorangegangenen Ansprüche,
**dadurch gekennzeichnet, dass**
Änderungen der Ausrichtung der Anzieleinheit (13) entsprechend zu Änderungen der Ausrichtung der Fernbedieneinheit (1) dazu gleichgerichtet oder entgegengesetzt gerichtet veranlassbar sind, vorzugsweise benutzerdefinierbar mittels einer Eingabemöglichkeit an der Fernbedieneinheit (1).

9. Vermessungsgerät (10) nach einem der vorangegangenen Ansprüche,
**dadurch gekennzeichnet, dass**
die Anzieleinheit (13) mit einer Ausrichtungsanzeigefunktionalität zur Angabe einer Ausrichtung der Anzieleinheit (13) auf einen Raumpunkt als Anzielpunkt ausgestattet ist, wobei die Ausrichtungsanzeigefunktionalität insbesondere ausgelegt ist zur Erzeugung eines Fadenkreuzes (3) zur Angabe einer Ausrichtung der Anzieleinheit (13) auf einen Raumpunkt als Anzielpunkt.

10. Vermessungsgerät (10) nach einem der vorangegangenen Ansprüche,
**dadurch gekennzeichnet, dass**
die Auswerte- und Steuereinheit (4) in die Fernbedieneinheit (1) integriert ist.

11. Handhaltbare, bewegliche Fernbedieneinheit (1) für ein Vermessungsgerät (10) nach einem der vorangegangenen Ansprüche,
**dadurch gekennzeichnet, dass**
● die Fernbedieneinheit (1) mit einem Display (2) ausgestattet ist zur Darstellung der Ausrichtung der Anzieleinheit (13) auf einen angezielten Raumpunkt in einem Bild eines bildgebenden Detektors mittels einer Ausrichtungsanzeigefunktionalität und
● die Fernbedieneinheit (1) mit Messfunktionalität ausgestattet ist zur Bestimmung einer räumlichen Ausrichtung der Fernbedieneinheit (1) und/oder zur Bestimmung von Änderungen der räumlichen Ausrichtung der Fernbedieneinheit (1).

12. Verfahren zum Vermessen von Zielpunkten mit einem Vermessungsgerät (10) mit
● einer Sensoreinheit (5), die ausgestattet ist mit
● einer Anzieleinheit (13), welche an einem an einer Basis (11) um eine Drehachse drehbar gelagerten Oberteil (12) um eine Schwenkachse schwenkbar gelagert ist, sowie
● einem ersten und einem zweiten Drehantrieb, welche das Oberteil (12) bzw. die Anzieleinheit (13) antreib- und ausrichtbar machen;
● einer Fernbedieneinheit (1) zur Veranlassung von Änderungen der Ausrichtung der Anzieleinheit (13); und ausgestattet mit Messfunktionalität zur Bestimmung einer räumlichen Ausrichtung der Fernbedieneinheit (1) und/oder zur Bestimmung von Bewegungen der Fernbedieneinheit (1);
● einer Auswerte- und Steuereinheit (4);
wobei
● eine räumliche Ausrichtung der Anzieleinheit (13) gegenüber der Basis (11) über zwei Winkelmesser erfassbar ist; und
● die Auswerte- und Steuereinheit (4) mit der Laserquelle, dem Entfernungsbestimmungsdetektor sowie den Winkelmessern verbunden ist, um eine erfasste Distanz einer entsprechenden Ausrichtung zuzuordnen und somit Koordinaten für Raumpunkte zu bestimmen,
**Dadurch gekennzeichnet, dass**
● die räumliche Ausrichtung der Fernbedieneinheit (1) und/oder Änderungen der räumlichen Ausrichtung der Fernbedieneinheit (1) mit einer Messfunktionalität der Fernbedieneinheit (1) bestimmt werden,
● Änderungen der Ausrichtung der Anzieleinheit (13) entsprechend der räumlichen Ausrichtung und/oder der Änderungen der räumlichen Ausrichtung der Fernbedieneinheit (1) veranlasst werden, und
● ein Übersetzungsverhältnis zwischen den Änderungen der Ausrichtung der Fernbedieneinheit (1) und den Änderungen der Ausrichtung der Anzieleinheit (13) in einer azimutalen und/oder elevativen Richtung in ihrem Ausmass und/oder ihrer Geschwindigkeit derart skalierbar ist, dass mindestens zwei sich mindestens hinsichtlich eines Übersetzungsverhältnisgrades voneinander unterscheidende Anzielmodi bereitgestellt werden.

13. Verfahren nach Anspruch 12,
**dadurch gekennzeichnet, dass**
die Ausrichtung der Anzieleinheit (13) auf einen Zielpunkt in einem Bild eines bildgebenden Detektors der Anzieleinheit mittels einer Ausrichtungsanzeigefunktionalität auf einem Display (2) der Fernbedieneinheit (1) dargestellt wird.

14. Verfahren nach Anspruch 12,
**dadurch gekennzeichnet, dass**
eine Skalierung des Übersetzungsverhältnisses, des Ausmasses und/oder der Geschwindigkeit der Ausrichtungsänderung der Anzieleinheit (13)
● benutzerdefinierbar ist, insbesondere an der Fernbedieneinheit (1) einstellbar, und/oder
● abhängig ist von einer Entfernung zwischen der Anzieleinheit (13) und einem Zielpunkt.

15. Computerprogrammprodukt mit Programmcode, der auf einem maschinenlesbaren Träger gespeichert ist, zur Bereitstellung, Steuerung und Durchführung des Verfahrens nach einem der Ansprüche 12 bis 14, insbesondere wenn das Programm auf einer als Auswerte- und Steuereinheit (4) des Vermessungsgeräts (10) nach einem der Ansprüche 1 bis 10 ausgebildeten elektronischen Datenverarbeitungseinheit ausgeführt wird.
